# EUROPEAN PATENT APPLICATION

(11) **EP 0 762 011 A1**
(43) Date of publication of application: **12.03.1997**
(21) Application number: 96202268.7
(22) Date of filing: 12.08.1996
(51) Int. Cl.: F16F 3/12, F16F 1/377, A47C 27/20

(54) **Composite elastic springy element and springy supporting element provided with such springy elements**

(30) Priority: 16.08.1995 BE 9500695
(71) Applicant: IMHOLD, naamloze vennootschap, B-9100 Sint-Niklaas (BE)
(72) Inventor: Poppe, Willy Philomena Florimond, 9100 Sint-Niklaas (BE)
(74) Representative: Donné, Eddy

(57) **Abstract**

Composite elastic springy element (1) which comprises a tubular foam body (2) which is provided with holes (3) extending inwards from the outside and a wire spring (4) which is surrounded by this body (2), characterized in that both ends of the wire spring (4) are located outside the central hole (5) of the tubular body (2), opposed to the ends of the tubular body (2).

## Description

The invention concerns a composite elastic springy element which comprises a tubular foam body which is provided with holes extending inwards from the outside and a wire spring which is surrounded by this body.

Similar composite springy elements keep their initial hardness and possess better properties than springy elements which are exclusively made of foam or exclusively made of a wire spring.

With the known composite springy elements, the wire spring is of even length as the central hole of the tubular body and possesses a diameter which is equal to the diameter of the central hole.

When this composite springy element is impressed, a slight torsion movement is created in the wire spring which, if that torsion can develop all over the full wire spring, results in that the wire spring pushes against the wall of the central hole of the body and moves with respect to this body trying to leave the central hole.

By choosing the diameter of the wire spring smaller than the inner diameter of the tubular body, it can be avoided that the wire spring pushes against the wall of this body, but the wire spring can then easily leave the tubular body.

It has also appeared that with the aforementioned known composite springy elements the wire spring easily cuts into the elements located above or underneath the material.

Therefore, it is necessary, when used, to cover both ends of these known composite elements, for example with a layer of fabric or non-woven, which is preferably glued to the elements.

The invention aims a composite springy element which does not show these and other disadvantages, and whereby the wire spring does not tend to leave the foam body and does not, or to a lesser extent, cuts into the material on which the element is applied.

This aim is realized according to the invention by the fact that both ends of the wire spring are located outside the central hole of the tubular body, opposed to the ends of this body.

Preferably the ends of the wire spring join the ends of the tubular body. This body can even be clamped between the ends of the wire spring.

The above-mentioned ends of the wire spring are for example formed by windings which are bigger than the ends of the central hole.

These windings can adapt any shape and be for example round, oval or square. This shape can be different or not from the shape of the windings located between these outermost windings, whereas these intermediate windings can be equal or different in size.

The invention also concerns a springy supporting element provided with composite elastic springy elements according to one of the preceding embodiments.

In order to better show the characteristics of the invention, some preferred embodiments of a composite elastic springy element of a springy supporting element are described hereafter, without any limitative character, reference being made to the accompanying. drawings, where :
figure 1 is a perspective and partially cut-away view of a composite elastic springy element according to the invention;
figure 2 is a schematic representation of a cross-section of a springy supporting element provided with springy elements according to figure 1;
figure 3 is a schematic representation of a cross-section analogous to the one in figure 2, but concerning another embodiment according to the invention;
figure 4 is a perspective view analogous to the one in figure 1, but concerning yet another embodiment of the invention;
figure 5 is a schematic representation of a cross-section analogous to the ones in the figures 2 and 3, but with springy elements as the one in figure 4.

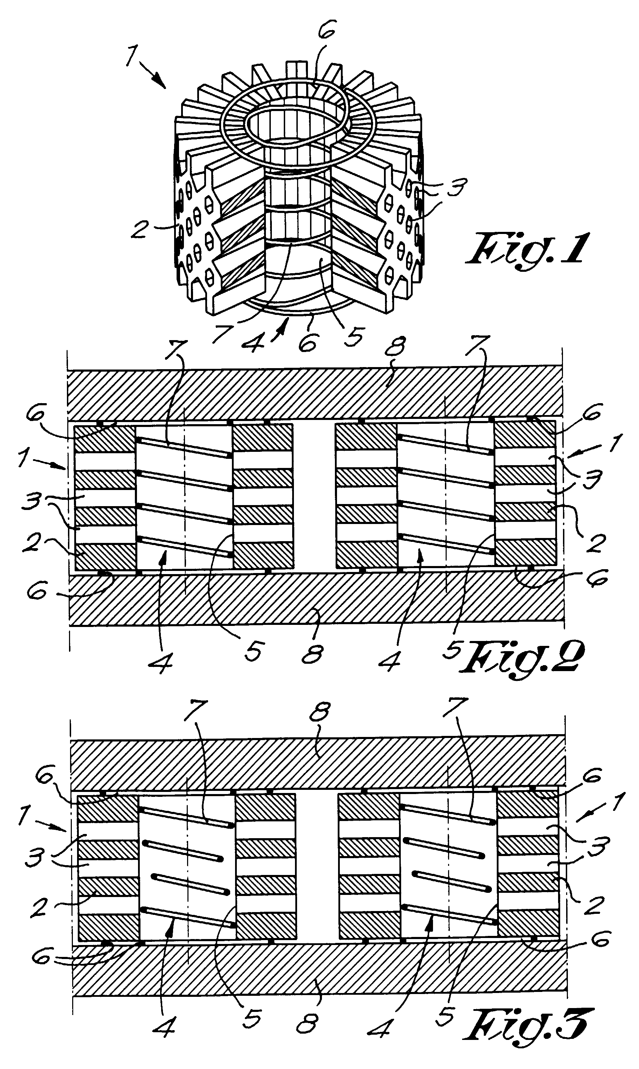

Figure 1 shows a composite elastic springy element 1 composed of a round tubular body 2 of springy foam which is provided in its face with a series of holes 3 which are arranged according to a set pattern and of a wire spring 4 which is surrounded by the body 2 and thus located in the central hole 5 of the body 2, but of which the ends are situated outside this central hole 5, opposed to the ends of the foam body 2.

In the embodiment, represented in figure 1, the above-mentioned ends are formed by windings 6 which are bigger than the ends of the central hole 5.

The holes 3 are for example lozenge-shaped and are distributed, as represented in figure 1, all over the surface of the body 2. They can however also be arranged only over a part of the surface. They extend inwards from the outside and the area of the cross-sections thereof decreases departing from a maximum value at the outside of the body 2 to a minimum value at the central hole 5.

The springy foam can be synthetic foam, such as for example polyurethane, or a natural foam, such as for example latex.

The wire spring 4 is mostly composed of steel, but it can for example be made as well from so-called composite material.

The ends of the wire spring 4 which form windings 6 are preferably located against the ends of the body 2.

It is particularly preferred that this body 2 is slightly clamped between these outmost windings 6. These windings can thereby be embedded wholly or partly in the foam body 2.

The aforementioned windings 6 located at the ends, describe at each end of the body 2 at least a part of one turn, for example almost a full turn as represented in figure 1. However, it is possible that these windings 6 describe only a part of a turn, for example three quaters, or more than one turn, for example a turn and a half, whereby these windings are located or not in one plane.

In this way the windings 6 located outside the central hole 5 can describe as a variant, not represented in the figures, several windings which are situated in different planes to realise for example a "pre-springing", when the springy element 1 is impressed or to allow connections with other materials.

As represented in figure 1, the windings 6 on the ends are round with a diameter greater than the diameter of the central hole 5.

The part 7 of the wire spring 4 which is located between these outmost windings 6 possesses round windings of which the diameter is equal to the inner diameter of the round central hole 5.

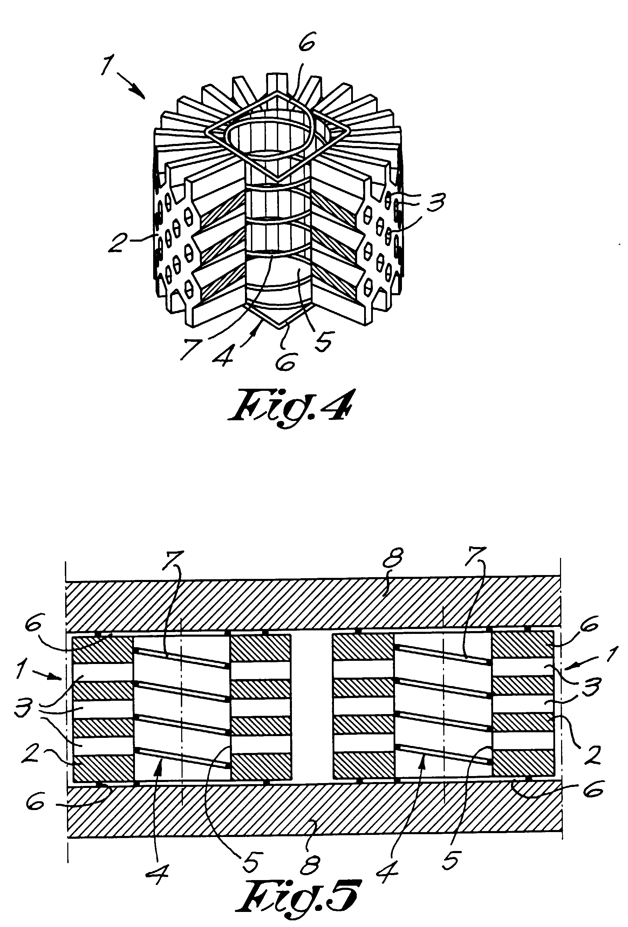

The composite springy element 1, described hereabove, can be used in a springy supporting element such as represented in figure 2, which consists of two layers 8 of springy material such as natural foam or synthetic foam, and of springy elements 1 which connect these layers 8 with each other. A similar supporting element can constitute the inner side of for example a mattress, a cushion or a seat or back of a sitting or a lying furniture.

To avoid the penetration of the stingy ends of the windings 6 located outside the central hole 5 into the layers 8 and/or the body 2, these windings 6 can be tied, for example knotted, to the body 2 and/or the layers 8.

The windings of the part 7 of the wire spring 4 must not necessarily be of the same diameter as the inner diameter of the central hole 5. They must neither be necessarily even big.

As represented in figure 3, the diameter of these windings can decrease towards the middle of the wire spring 4.

The windings 6, located at the ends of the wire spring 4, and the windings of the part 7 lying therebetween, must not necessarily be round and must not necessarily possess the same shape.

The windings 6 located at the ends and thus outside the central hole 5 can be oval- or rectangular-shaped, whereas the windings of the part 7 can for example be round.

In figure 4 is represented a variant in which the outmost windings 6 are square and the windings of the part 7 round, with a diameter which corresponds with the inner diameter of the central hole 5.

Figure 5 represents a springy supporting element analogous to the one according to figure 2, but with the springy elements 1 of figure 4.

In all these embodiments the outmost windings 6 prevent the wire spring 4 to come out of the central hole 5. The danger of cutting into the material which comes in contact with the springy element 1 is small and, in a springy supporting element, the layers 8 need not to be so thick.

The present invention is in no way limited to the embodiments described herebefore and represented in the figures, but such composite springy element or springy supporting element can be realized in different variants without leaving the scope of the invention.

## Claims

1. Composite elastic springy element (1) which comprises a tubular foam body (2) which is provided with holes (3) extending inwards from the outside and a wire spring (4) which is surrounded by this body (2), characterized in that both ends of the wire spring (4) are located outside the central hole (5) of the tubular. body (2), opposed to the ends of the tubular body (2).

2. Composite elastic springy element (1) according to claim 1, characterized in that the ends of the wire pring (4) join the ends of the tubular body (2).

3. Composite elastic springy element (1), according to claim 2, characterized in that the tubular body (2) is clamped between the ends of the wire spring (4).

4. Composite elastic springy element (1) according to either one of the preceding claims, characterized in that the ends of the wire spring (4) are formed by windings (6) which are greater than the ends of the central hole.

5. Composite elastic springy element (1) according to claim 4, characterized in that the windings (6) on the ends of the wire spring (4) are round, oval or square.

6. Composite elastic springy element (1) according to any one of claims 4 and 5, characterized in that the shape of the windings (6), located at the ends and outside the central hole (5), is different from the shape of the windings (6) located between these outmost windings (6).

7. Composite elastic springy element (1) according to any one of the claims 4 to 6, characterized in that the windings (6), located at the ends and outside the central hole (5), describe each at least a part of one turn.

8. Composite elastic springy material according to any one of the preceding claims, characterized in that the windings of the part (7) which is located between the ends of the wire spring (4), situated outside the central hole (5), are different in size one from the other.

9. Composite elastic springy element (1) according to any one of the preceding claims, characterized in that the wire spring (4) is made of steel or of a composite material.

10. Springy supporting element which comprises two layers (8) of springy material between which composite elastic springy elements (1) are located, characterized in that as composite elastic springy elements (1), elements according to one of the preceding claims are used.
